# EUROPEAN PATENT SPECIFICATION

(11) **EP 2 543 897 B1**
(45) Date of publication and mention of the grant of the patent: **11.10.2017**
(21) Application number: 12172011.4
(22) Date of filing: 14.06.2012
(51) Int. Cl.: F16B 37/04

(54) **Fastening element and method for producing a fastening arrangement**
Befestigungselement und Verfahren zur Herstellung einer Befestigungsanordnung
Élément de fixation et procédé de production d'un agencement de fixation

(30) Priority: 08.07.2011 DE 102011106989
(43) Date of publication of application: 09.01.2013
(73) Proprietor: Newfrey LLC, New Britain, CT 06053 (US)
(72) Inventor: Rosemann, Frank, 35394 Giessen (DE); Kempf, Christian, 35394 Giessen (DE)
(74) Representative: Witte, Weller & Partner Patentanwälte mbB

(56) References cited:
- DE-U1- 8 529 661
- FR-A1- 2 298 029

## Description

The present invention relates to a fastening element for fastening a plate element to a workpiece, the fastening element having a main portion, in which a bolt receptacle for a bolt is formed, and a flange portion, which extends from the main portion in a radial direction, according to the preamble of claim 1, wherein such fastening element is known from document DE 85 29 661 U1.

The present invention relates, furthermore, to a fastening arrangement with a workpiece, with a bolt which projects from a surface of the workpiece, with a plate element and with a fastening element which is secured to the bolt, the plate element being secured to the workpiece by means of the fastening element.

Finally, the present invention relates to a method for producing such a fastening arrangement.

In the field of motor vehicle body construction, a frequent problem which arises is that underbody elements or trim elements have to be fastened to the vehicle body. The vehicle body in this case constitutes a workpiece to which a plate element of this type is to be secured.

It is known, in this context, to design a fastening element in two parts for this purpose, one part being arranged between the plate element and the workpiece, and the other part of the fastening element being arranged on that side of the plate element which faces away from the workpiece and subsequently being latched together with the first part.

By the first part being arranged between the plate element and the workpiece, the situation can be avoided where the plate element chafes against the workpiece. Especially when the workpiece is a painted body portion, such chafing problems may lead to corrosion.

Against this background, an object of the invention is to specify an improved fastening element, an improved fastening arrangement and an improved fastening method for producing a fastening arrangement, which, in particular, are more cost-effective and make it possible to produce the fastening arrangement easily.

This object is achieved, on the one hand, by means of a fastening element according to claim 1, a plurality of tabs extending from an underside of the flange portion, the tabs being deflectable in the radial direction in such a way that a plate element can be received between radially deflected tabs and the underside of the flange portion.

The above object is achieved, furthermore, by means of a fastening arrangement of claim 9, a fastening element according to the invention being used.

Finally, the above object is achieved by means of a method for producing a fastening arrangement according to claim 12, in particular a fastening arrangement of the type according to the invention, with the steps of joining a bolt to a workpiece and of providing a fastening element which has a receptacle for the bolt and a flange portion, the flange portion extending in a radial direction, a plurality of tabs which are deflectable in the radial direction extending from an underside of the flange portion, the fastening element being inserted into an orifice of a plate element in such a way that the tabs extend through the orifice, and the fastening element being secured to the bolt, the bolt being received in the receptacle, and the tabs being deflected radially so that they are arranged between the plate element and the workpiece.

Consequently, in the fastening element according to the invention, in the assembled state the tabs form spacer elements between the plate element and the workpiece, so that chafing movements between the plate element and the workpiece are avoided. In the assembled state, the tabs are in this case preferably constantly in the elastically deflected state. The tabs can then, in the assembled state, extend particularly in a direction essentially parallel to the extent of the flange portion.

In the method for producing the fastening arrangement, the fastening element is placed onto the bolt in a direction preferably perpendicular to a surface of the workpiece. During this operation of putting in place along a longitudinal direction, the tabs are spread radially away from one another, preferably automatically, when they come to bear against the workpiece, thus making the assembly operation markedly easier.

The object is thus achieved in full.

It is in this case especially beneficial if the tabs are arranged in the manner of a crown on a crown diameter which is larger than a diameter of the bolt receptacle.

In this embodiment, the crown diameter is preferably concentric to a longitudinal axis of the bolt receptacle, so that the tabs, when being placed onto the bolt, are led laterally past the shank of the latter until they impinge onto the workpiece.

According to the invention, at least one tab extends obliquely outwards from the underside of the flange portion.

The advantage of this is that, during assembly, the radial deflection direction is predetermined by the obliquity. In other words, the situation can be avoided where the tab blocks the assembly operation.

Furthermore, the obliquity of the tab can be used to premount the fastening part on a plate element. Consequently, in the fastening arrangement according to the invention, it is advantageous if the plate element has an orifice, the diameter of which is larger than a crown diameter, on which the tabs of the fastening element are arranged.

In this embodiment, the fastening element can be inserted into the plate element in that the tabs are led through the orifice until the flange portion of the fastening element lies on a top side of the plate element (the diameter of the flange portion is preferably markedly larger than the diameter of the orifice).

If the at least one tab extends obliquely outwards with respect to the longitudinal axis, the tab, in order to be introduced into the orifice, can be bent inwards in the radial direction in order to make it easier or make it possible to introduce it into the orifice. After being introduced into the orifice, the tab deflected radially inwards relaxes again, so that it engages behind the plate element. Preassembly can thereby be achieved in a simple way, and therefore, in the method according to the invention, it is especially advantageous if the tabs are oriented, in a non-deflected position, obliquely with respect to a longitudinal axis, and if the fastening element is premounted on the plate element in that the tabs, in order to be introduced into the orifice, are elastically deflected radially inwards and, after elastic recovery, engage behind the plate element.

In the fastening element according to the invention, it is advantageous if at least one tab has on its radial outside a projection which is arranged such that the fastening element can be premounted on the plate element in that a margin of the plate element is arranged between the underside of the flange portion and the projection.

Such a projection is advantageous, since the fastening element, in the premounting position, can assume a relatively fixed position in relation to the plate element.

It is in this case especially advantageous if the projection is in the form of a ring segment, so that a relatively large bearing surface can be achieved between the projection and the plate element.

Furthermore, it is advantageous, overall, if the tabs extend around the bolt receptacle in each case over a circumferential portion which is larger than 20°, in particular larger than 30°, and preferably smaller than 75°.

In tabs of this type, a good compromise can be achieved between sufficient rigidity of the tabs and simple radial deflectability.

The number of tabs of the fastening element is in this case preferably larger than 2 and smaller than 10. A number of three tabs is especially advantageous. The three tabs can extend in each case over a circumferential portion or angle of about 45° to 65°.

Furthermore, it is especially advantageous, overall, if the fastening element is designed in one part.

The fastening element is in this case preferably produced from plastic, the tabs preferably being injection-moulded onto the main portion or the flange portion.

In the fastening arrangement according to the invention, it is advantageous if a crown diameter on which the tabs of the fastening arrangement are arranged is larger than a diameter of a flange of the bolt.

The mountability can thereby be made easier.

The bolt receptacle in the fastening element can be formed by an internally threaded portion, so that the fastening element is screwed onto a bolt which is preferably likewise designed as a threaded bolt. Alternatively, the bolt receptacle may also contain an elastically deflectable detent finger which, for example, engages into an undercut portion of the bolt (as, for example, in a T bolt, ring-groove bolt, etc.).

It is also possible, furthermore, to connect the fastening element to the bolt without screwing movements by means of percussion assembly.

The bolt receptacle may be formed continuously through the fastening element in the longitudinal direction, but may also be closed on the side facing away from the flange portion. Furthermore, it is preferable if the main portion of the fastening element, the said main portion forming the bolt receptacle, is of polygonal design on its outer circumference. This embodiment is advantageous especially when the fastening element is screwed onto a bolt, since the polygonal portion can be used for applying a tool.

As mentioned above, during assembly the tabs come into place between the surface of the workpiece and the plate element. The tabs thus provide chafing protection when the motor vehicle is driving along. Furthermore, they provide acoustic decoupling between the plate element and the workpiece (the vehicle body), so that a reduction in noise during driving is also to be expected.

Furthermore, during assembly, the tabs are preferably pressed against the inner circumference of the orifice of the trim part as a result of radial inward deflection. Relative movements between the plate element and the workpiece can consequently be further avoided. The risk of paint being chafed off during driving can be further minimized.

Furthermore, it is possible to design the tabs with a pointed raised geometry which counteracts a twisting of the nut (sawtooth profile). Such points or teeth may be provided, for example, on the radial outside of the tabs. In the assembled state, these points are then pressed into the underside of the plate element to be fastened. Thus, for example, greater safety against unintended loosening by twisting can be achieved. The points may be individual points. It may be advantageous, however, for the points to have a sawtooth-like design, so that, when the fastening element is being screwed onto a bolt, the points slide along on the surface of the plate element, but catch in the material of the plate element when the fastening element is twisted back.

Consequently, by means of the fastening element according to the invention, a one-part fastening concept for the acoustic decoupling of plate elements, such as fastening parts, with additional chafing protection and a preferably play-free centring of the plate element can be achieved. The fastening element is preferably in one part and can therefore be produced cost-effectively. The idea of this fastening arrangement can also be transferred to other applications, such as, for example, pushbuttons. The fastening element can be delivered, premounted on the plate element, or can be installed directly on a production line.

It will be appreciated that the features mentioned above and those yet to be explained below can be used not only in the combination specified in each case, but also in other combinations or alone, without departing from the scope of the present invention.

Exemplary embodiments of the invention are illustrated in the drawing and are explained in more detail in the following description. In the drawing:
- Fig. 1: shows a perspective view of an embodiment of a fastening element according to the invention obliquely from above;
- Fig. 2: shows a perspective view of the fastening element of Fig. 1 obliquely from below;
- Fig. 3: shows a diagrammatic longitudinal sectional view through a preassembled unit consisting of a fastening element and of a plate element;
- Fig. 4: shows a diagrammatic longitudinal sectional view through an embodiment of a fastening arrangement according to the invention; and
- Fig. 5: shows a view of a detail of a further embodiment of a fastening arrangement according to the invention.

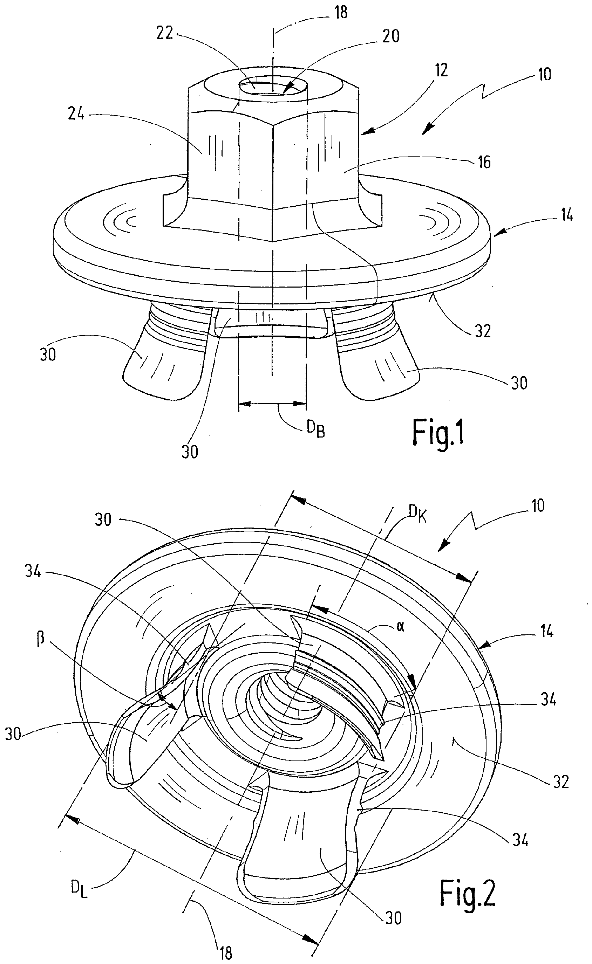

A fastening element is illustrated diagrammatically in Fig. 1 and 2 and is designated in general by 10.

The fastening element 10 has a main portion 12 and a flange portion 14. The main portion 12 contains a shank 16 which is oriented along a longitudinal axis 18 and which extends from a first side (top side) of the flange portion 14.

A bolt receptacle 20 for receiving a bolt is formed in the main portion 12. The bolt receptacle 20 is preferably designed as a bore extending through the main portion 12 and the flange portion 14 and having an internal thread 22.

The outer circumference of the shank 16 is of polygonal design, so that a tool, such as a spanner, can be applied.

A plurality of tabs 30, in the present case three, extend from the second side (underside) 32 of the flange portion 14. The tabs 30 extend in each case in a direction oblique with respect to the longitudinal axis 18, specifically obliquely outwards. The tabs are in each case shaped in cross section approximately in the form of an arc of a circle and at their free ends terminate in the form of a duck's beak.

A projection 34 in the form of a ring segment, which is dealt with in more detail below, is provided on the radial outside of each of the tabs 30.

Fig. 1 shows that the bolt receptacle 20 possesses an inside diameter D_{B}. The tabs 30 are arranged around the bolt receptacle 20 on a crown diameter D_{K}, the crown diameter D_{K} being larger than the bolt receptacle diameter D_{B}.

The free ends of the tabs 30 lie on a diameter D_{L} which is larger than the crown diameter D_{K}.

The three tabs 30 extend in each case over a circumferential portion or angle α which is larger than 20° and smaller than 75° and which amounts in the present case to about 60°.

Furthermore, the angle β of the obliquity of the tabs 30 in relation to the longitudinal axis amounts to about 2 to 20°, in the present case to about 5°.

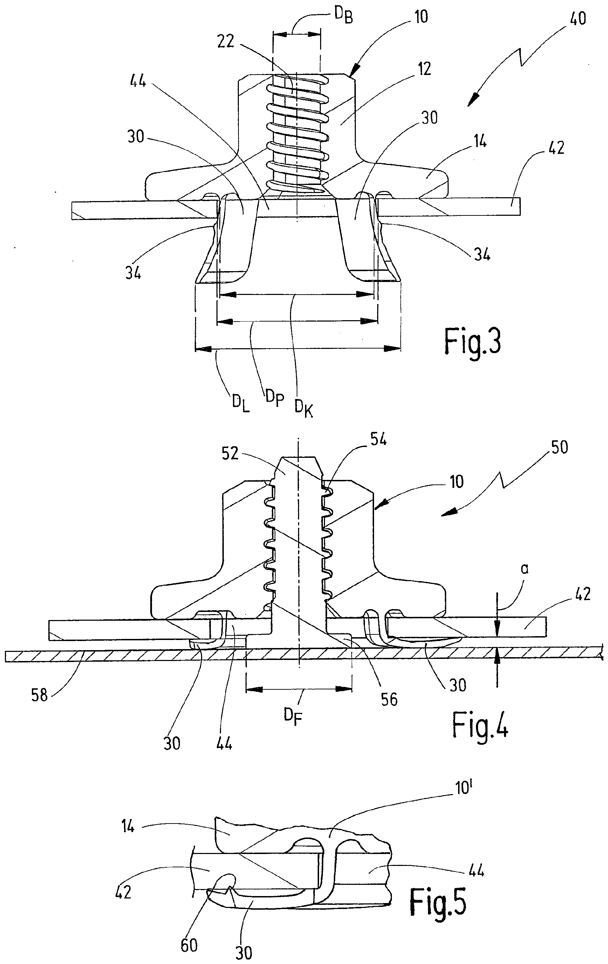

Fig. 3 shows a preassembled unit 40 consisting of the fastening element 10 of Fig. 1 and 2 and of a plate element 42. The plate element 42 has an orifice 44 which has a diameter D_{P}. The diameter D_{P} is larger than the crown diameter D_{K} and smaller than the tab end diameter D_{L}.

The fastening element is premounted on the plate element 42 in that the tabs 30 are elastically deflected radially inwards, so that they can be introduced into the orifice 42 until the underside of the flange portion 14 lies on a top side of the plate element 42. The tabs 30 subsequently relax again or recover in the radial direction so that they engage behind the plate element 42.

The abovementioned projections 34 assist this securing of the fastening element 10 to the plate element 42.

An embodiment of a fastening arrangement 50 according to the invention is shown in Fig. 4.

The fastening arrangement 50 contains a bolt 52 which has a shank with an external thread 54 and also a bolt flange 56. The bolt 52 is joined with its bolt flange 56 to a surface of a workpiece 58 which in the present case is in the form of a body panel. The workpiece 58 and the bolt 52 are preferably produced from metal. The fastening element 10 is preferably produced from plastic, preferably by the injection-moulding method. The plate element 42 may be an insulating element or a trim element or the like, made from plastic, from a fibre material or the like.

The bolt 52 may, for example, be joined to the workpiece 58 by stud welding, as it is known, but may also be glued to the surface of the workpiece 58 or fastened to the latter in another way.

To produce the fastening arrangement 50, the preassembled unit 40 of Fig. 3 is placed onto the free end of the bolt 52. The fastening element 10 is subsequently screwed onto the bolt 52. The free ends of the tabs 30 in this case come against the surface of the workpiece 58 and are deflected radially outwards. In the end position shown in Fig. 4, the deflected tabs 30 lie between the plate element 42 and the workpiece 58. The clearance thereby set up between the plate element 42 and the surface of the workpiece 58 is shown at a.

Furthermore, Fig. 4 shows that the diameter D_{F} of the bolt flange 56 is preferably smaller than the crown diameter D_{K}, in any event larger than the tab end diameter D_{L}, so that, during assembly, the tabs lie on the surface of the workpiece 58 and do not come into contact with the bolt flange 56.

Fig. 5 shows a view of a detail from Fig. 4 with an alternative embodiment of a fastening element 10'. In the case of at least one tab 30 of the fastening element 10', a projecting point or tooth is formed on the radial outside. In the assembled state, this point 60 engages into the plate element 42, so that it becomes more difficult for the fastening element 10' to be loosened from the bolt 52 by twisting. A type of anti-twist protection is thereby afforded. The point 60 may be of sawtooth-like design in the circumferential direction, so as not to make it unnecessarily more difficult to screw the fastening element 10' onto the bolt 50.

## Claims

1. Fastening element (10) for fastening a plate element (42) to a workpiece (58), the fastening element (10) having a main portion (12), in which a bolt receptacle (20) for a bolt (52) is formed, which extends along a longitudinal axis, and a flange portion (14), which extends from the main portion (12) in a radial direction, a plurality of tabs (30) extending from an underside (32) of the flange portion (14) and being deflectable in the radial direction in such a way that a plate element (42) can be received between radially deflected tabs (30) and the underside (32) of the flange portion,
each of the tabs (30) extending, in an elastically non-deflected condition, obliqueliy from the underside of the flange portion (14),
**characterized in that** an angle of obliquity of the tabs (30) in relation to the longitudinal axis is in the range of 2° to 20°, and being adapted to be deflected radially so as to extend radially parallel to the extent of the flange portion (14), so as to form spacer elements between the plate element (42) and the workpiece (58).

2. Fastening element according to Claim 1, the tabs (30) being arranged in the manner of a crown on a crown diameter (D_{K}) which is larger than a diameter (D_{B}) of the bolt receptacle (20).

3. Fastening element according to one of Claims 1 - 2, at least one tab (30) having on its radial outside a projection (34) which is arranged such that the fastening element (10) can be premounted on the plate element (42) in that a margin of the plate element (42) is arranged between the underside (32) of the flange portion (14) and the projection (34).

4. Fastening element according to Claim 3, the projection (34) being in the form of a ring segment.

5. Fastening element according to one of Claims 1 - 4, the tabs (30) extending around the bolt receptacle (20) in each case over a circumferential portion (α) which is larger than 20°, in particular larger than 30°, and preferably smaller than 75°.

6. Fastening element according to one of Claims 1 - 5, the fastening element (10) being designed in one part.

7. Fastening element according to one of claims 1 - 6, each of the tabs (30) being shaped in cross section in the form of an arc and at their free ends terminate in the form of a duck's beak.

8. Fasteing element according to one of claims 1 - 7, a projecting tooth being formed on the radial outside of at least one of the tabs (30), which projecting tooth being adapted to engage, in the assembled state, into the plate element (42) so as to form an anti-twist protection.

9. Fastening arrangement (50) with a workpiece (58), with a bolt (52) which projects from a surface of the workpiece (58), with a plate element (42) and with a fastening element (10) which is secured to the bolt (52), the plate element (42) being secured to the workpiece (58) by means of the fastening element (10), the fastening element being a fastening element (10) according to one of Claims 1 - 8.

10. Fastening arrangement according to Claim 9, the plate element (42) having an orifice (44), the diameter (D_{P}) of which is larger than a crown diameter (D_{K}), on which the tabs (30) of the fastening element (10) are arranged.

11. Fastening arrangement according to Claim 9 or 10, a crown diameter (D_{K}) on which the tabs (30) of the fastening element (10) are arranged being larger than a diameter (D_{F}) of a flange (56) of the bolt (52).

12. Method for producing a fastening arrangement (50), in particular a fastening arrangement according to one of Claims 9 - 11, with the steps:
- joining of a bolt (52) to a workpiece (58);
- provision of a fastening element (10) which has a receptacle (20) for the bolt (52) and a flange portion (14), the flange portion (14) extending in a radial direction, a plurality of tabs (30) which are deflectable in the radial direction extending from an underside (32) of the flange portion (14),
- insertion of the fastening element (10) into an orifice (44) of a plate element (42) in such a way that the tabs (30) extend through the orifice (44), and
- securing of the fastening element (10) to the bolt (52), the bolt (52) being received in the receptacle (20), and the tabs (30) being deflected radially so that they extend parallel to the extent of the flange portion (14) and form spacer elements which are arranged between the plate element (42) and the workpiece (58).

13. Method according to Claim 12, the tabs (30) being oriented, in a non-deflected position, obliquely with respect to a longitudinal axis (18), and the fastening element (10) being premounted on the plate element (42), the tabs (30), in order to be introduced into the orifice (44), being elastically deflected radially inwards and, after elastic recovery, engaging behind the plate element (42).

## Patentansprüche

1. Befestigungselement (10) zur Befestigung eines Plattenelementes (42) an einem Werkstück (58), wobei das Befestigungselement (10) einen Hauptabschnitt (12), in dem eine Bolzenaufnahme (20) für einen Bolzen (52) ausgebildet ist, die sich entlang einer Längsachse erstreckt, und einen Flanschabschnitt (14) aufweist, der sich in einer radialen Richtung von dem Hauptabschnitt (12) erstreckt, wobei eine Mehrzahl von Laschen (30) sich von einer Unterseite (32) des Flanschabschnittes (14) erstreckt, die in radialer Richtung auslenkbar sind, derart, dass zwischen radial ausgelenkten Laschen (30) und der Unterseite (32) des Flanschabschnittes ein Plattenelement (42) aufnehmbar ist,
wobei jede der Laschen (30) sich in einem elastisch nicht ausgelenkten Zustand von der Unterseite (32) des Flanschabschnittes (14) schräg erstreckt,
**dadurch gekennzeichnet, dass** ein Winkel der Schrägstellung der Laschen (30) in Bezug auf die Längsachse in einem Bereich von 2° bis 20° liegt, und wobei die Laschen (30) dazu ausgelegt sind, derart radial ausgelenkt zu werden, dass sie sich parallel zur Erstreckung des Flanschabschnittes (14) erstrecken, um auf diese Weise Abstandselemente zwischen dem Plattenelement (42) und dem Werkstück (58) zu bilden.

2. Befestigungselement nach Anspruch 1, wobei die Laschen (30) kranzartig auf einem Kranzdurchmesser (D_{K}) angeordnet sind, der größer ist als ein Durchmesser (D_{B}) der Bolzenaufnahme (20).

3. Befestigungselement nach einem der Ansprüche 1 - 2, wobei wenigstens eine Lasche (30) an ihrer radialen Außenseite einen Vorsprung (34) aufweist, der so angeordnet ist, dass das Befestigungselement (10) an dem Plattenelement (42) vormontierbar ist, indem ein Rand des Plattenelementes (42) zwischen der Unterseite (32) des Flanschabschnittes (14) und dem Vorsprung (34) angeordnet ist.

4. Befestigungselement nach Anspruch 3, wobei der Vorsprung (34) ringabschnittförmig ist.

5. Befestigungselement nach einem der Ansprüche 1 - 4, wobei die Laschen (30) sich jeweils über einen Umfangsabschnitt (α) um die Bolzenaufnahme (20) herum erstrecken, der größer ist als 20°, insbesondere größer als 30°, und vorzugsweise kleiner als 75°.

6. Befestigungselement nach einem der Ansprüche 1 - 5, wobei das Befestigungselement (10) einteilig ausgebildet ist.

7. Befestigungselement nach einem der Ansprüche 1 - 6, wobei jede der Laschen (30) im Querschnitt in der Form eines Bogens geformt ist und die Laschen an ihren freien Enden in der Form eines Entenschnabels auslaufen.

8. Befestigungselement nach einem der Ansprüche 1 - 7, wobei eine vorstehende Zacke an der radialen Außenseite von wenigstens einer der Laschen (30) ausgebildet ist, wobei die vorstehende Zacke dazu ausgebildet ist, in dem montierten Zustand in das Plattenelement (42) zu greifen, um einen Verdrehschutz zu bilden.

9. Befestigungsanordnung (50) mit einem Werkstück (58), einem Bolzen (52), der von einer Oberfläche des Werkstückes (58) vorsteht, einem Plattenelement (42) und einem Befestigungselement (10), das an dem Bolzen (52) festgelegt ist, wobei das Plattenelement (42) mittels des Befestigungselementes (10) an dem Werkstück (58) festgelegt ist, wobei das Befestigungselement ein Befestigungselement (10) nach einem der Ansprüche 1 - 8 ist.

10. Befestigungsanordnung nach Anspruch 9, wobei das Plattenelement (42) eine Öffnung (44) aufweist, deren Durchmesser (D_{P}) größer ist als ein Kranzdurchmesser (D_{K}), auf dem die Laschen (30) des Befestigungselementes (10) angeordnet sind.

11. Befestigungsanordnung nach Anspruch 9 oder 10, wobei ein Kranzdurchmesser (D_{K}), auf dem die Laschen (30) des Befestigungselementes (10) angeordnet sind, größer ist als ein Durchmesser (D_{F}) eines Flansches (56) des Bolzens (52).

12. Verfahren zum Herstellen einer Befestigungsanordnung (50), insbesondere einer Befestigungsanordnung nach einem der Ansprüche 9 - 11, mit den Schritten:
- Fügen eines Bolzens (52) an ein Werkstück (58);
- Bereitstellen eines Befestigungselementes (10), das eine Aufnahme (20) für den Bolzen (52) und einen Flanschabschnitt (14) aufweist, wobei der Flanschabschnitt (14) sich in einer radialen Richtung erstreckt, wobei sich von einer Unterseite (32) des Flanschabschnittes (14) eine Mehrzahl von Laschen (30) erstreckt, die in radialer Richtung auslenkbar sind,
- Einsetzen des Befestigungselementes (10) in eine Öffnung (44) eines Plattenelementes (42), derart, dass die Laschen (30) sich durch die Öffnung (44) hindurch erstrecken, und
- Festlegen des Befestigungselementes (10) an dem Bolzen (52), wobei der Bolzen (52) in der Aufnahme (20) aufgenommen wird und wobei die Laschen (30) radial ausgelenkt werden, so dass sie sich parallel zu der Erstreckung des Flanschabschnittes (14) erstrecken und Abstandselemente bilden, die zwischen dem Plattenelement (42) und dem Werkstück (58) angeordnet sind.

13. Verfahren nach Anspruch 12, wobei die Laschen (30) in einer nicht ausgelenkten Stellung schräg zu einer Längsachse (18) ausgerichtet sind und wobei das Befestigungselement (10) an dem Plattenelement (42) vormontiert wird, wobei die Laschen (30) zum Einführen in die Öffnung (44) radial nach innen elastisch ausgelenkt werden und nach elastischer Rückstellung das Plattenelement (42) hintergreifen.

## Revendications

1. Élément de fixation (10) destiné à fixer un élément plaque (42) à une pièce de travail (58), l'élément de fixation (10) comportant une partie principale (12), dans laquelle est formé un réceptacle de boulon (20) qui est destiné à recevoir un boulon (52) et qui s'étend le long d'un axe longitudinal, et une partie rebord (14), qui s'étend à partir de la partie principale (12) dans une direction radiale, une pluralité de pattes (30) s'étendant à partir d'un dessous (32) de la partie rebord (14) et pouvant être pliés dans la direction radiale de sorte qu'un élément plaque (42) puisse être reçu entre des pattes (30) pliées radialement et le dessous (32) de la partie rebord,
chacune des pattes (30) s'étendant, dans un état non plié élastiquement, en oblique à partir du dessous de la partie rebord (14),
ledit élément de fixation étant **caractérisé en ce qu'**un angle d'obliquité des pattes (30) par rapport à l'axe longitudinal est de l'ordre de 2° à 20°, et **en ce qu'**il est conçu pour être plié radialement de manière à s'étendre parallèlement à l'étendue de la partie rebord (14), de manière à former des éléments d'espacement entre l'élément plaque (42) et la pièce de travail (58).

2. Élément de fixation selon la revendication 1, les pattes (30) étant conçues sous la forme d'une couronne sur un diamètre de couronne (D_{K}) qui est supérieur à un diamètre (D_{B}) du réceptacle de boulon (20).

3. Élément de fixation selon l'une des revendications 1 à 2, dans lequel au moins une patte (30) a sur sa partie extérieure radiale une protubérance (34) conçue de sorte que l'élément de fixation (10) puisse être prémonté sur l'élément plaque (42) de sorte qu'une marge de l'élément plaque (42) soit disposée entre le dessous (32) de la partie rebord (14) et la protubérance (34).

4. Élément de fixation selon la revendication 3, dans lequel la protubérance (34) se présente sous la forme d'un segment de bague.

5. Élément de fixation selon l'une des revendications 1 à 4, dans lequel les pattes (30) s'étendent autour du réceptacle de boulon (20) dans chaque cas sur une partie circonférentielle (α) qui est supérieure à 20°, en particulier supérieure à 30°, et de préférence inférieure à 75°.

6. Élément de fixation selon l'une quelconque des revendications 1 à 5, l'élément de fixation (10) étant conçu d'un seul bloc.

7. Élément de fixation selon l'une des revendications 1 à 6, dans lequel chacune des pattes (30) présente une forme, en coupe transversale, d'un arc qui se termine à ses extrémités libres sous la forme d'un bec de canard.

8. Élément de fixation selon l'une des revendications 1 à 7, dans lequel une dent en saillie est formée sur la partie extérieure radiale d'au moins une des pattes (30), ladite dent en saillie étant conçue pour s'engager, dans l'état assemblé, sur l'élément plaque (42) afin de former une protection anti-torsion.

9. Agencement de fixation (50) comprenant une pièce de travail (58), un boulon (52) qui se projette à partir d'une surface de la pièce de travail (58), un élément plaque (42) et un élément de fixation (10) fixé au boulon (52), l'élément plaque (42) étant fixé à la pièce de travail (58) au moyen de l'élément de fixation (10), l'élément de fixation étant un élément de fixation (10) selon l'une des revendications 1 à 8.

10. Agencement de fixation selon la revendication 9, dans lequel l'élément plaque (42) comporte un orifice (44) dont le diamètre (D_{P}) est supérieur à un diamètre de couronne (D_{K}) sur lequel les pattes (30) de l'élément de fixation (10) sont disposées.

11. Agencement de fixation selon la revendication 9 ou 10, dans lequel un diamètre de couronne (D_{K}) sur lequel les pattes (30) de l'élément de fixation (10) sont disposées est supérieur à un diamètre (D_{F}) d'une embase (56) du boulon (52).

12. Procédé de production d'un agencement de fixation (50), en particulier d'un agencement de fixation selon l'une quelconque des revendications 9 à 11, comprenant les étapes consistant à :
joindre un boulon (52) à une pièce de travail (58) ;
apporter un élément de fixation (10) comportant un réceptacle (20) pour le boulon (52) et une partie rebord (14), la partie rebord (14) s'étendant dans une direction radiale, et une pluralité de pattes (30) qui peuvent être pliées dans la direction radiale s'étendant à partir d'un dessous (32) de la partie rebord (14) ;
insérer l'élément de fixation (10) dans un orifice (44) d'un élément plaque (42) de sorte que les pattes (30) s'étendent dans l'orifice (44) ; et
fixer l'élément de fixation (10) au boulon (52), le boulon (52) étant reçu dans le réceptacle (20), et les pattes (30) étant pliées radialement de manière à ce qu'elles s'étendent parallèlement à l'étendue de la partie rebord (14) et forment des éléments d'espacement disposés entre l'élément plaque (42) et la pièce de travail (58).

13. Procédé selon la revendication 12, dans lequel les pattes (30) sont orientées dans une position non pliée, en oblique par rapport à un axe longitudinal (18), dans lequel l'élément de fixation (10) est prémonté sur l'élément plaque (42), et dans lequel les pattes (30), pour pouvoir être introduites dans l'orifice (44), sont pliées élastiquement radialement vers l'intérieur, puis s'engagent, après recouvrance élastique, derrière l'élément plaque (42).
